**Europäisches Patentamt**

**European Patent Office**

**Office européen des brevets**

(19)

(11) Veröffentlichungsnummer : **0 162 873 B2**

(12) **NEUE EUROPÄISCHE PATENTSCHRIFT**

(45) Veröffentlichungstag der neuen Patentschrift :
04.03.92 Patentblatt 92/10

(51) Int. Cl.$^5$ : **B65D 6/28,** B65D 19/44

(21) Anmeldenummer : **84904088.6**

(22) Anmeldetag : **19.10.84**

(86) Internationale Anmeldenummer :
**PCT/DE84/00217**

(87) Internationale Veröffentlichungsnummer :
**WO 85/01714 25.04.85 Gazette 85/10**

(54) **VERFAHREN ZUR UNTERBRINGUNG VON FÄSSERN EINER BESTIMMTEN GRÖSSE IN EINEM ISO-CONTAINER.**

Die Akte enthält technische Angaben, die nach dem Eingang der Anmeldung eingereicht wurden und die nicht in dieser Patentschrift enthalten sind.

(30) Priorität : **20.10.83 DE 3338090**

(43) Veröffentlichungstag der Anmeldung :
**04.12.85 Patentblatt 85/49**

(45) Bekanntmachung des Hinweises auf die Patenterteilung :
**16.09.87 Patentblatt 87/38**

(45) Bekanntmachung des Hinweises auf die Entscheidung über den Einspruch :
**04.03.92 Patentblatt 92/10**

(84) Benannte Vertragsstaaten :
**AT BE CH FR GB LI NL SE**

(56) Entgegenhaltungen :
**EP-A-01 137 55
WO-A-84/00528
DE-A- 2 134 034
FR-A- 1 104 937
FR-A- 1 324 373
GB-A- 679 035
US-A- 1 635 506
US-A- 3 834 323
Auszug aus dem Jahresbericht 1982/1983 des Syndicat europeén de l' industrie des futs en acier (SEFA) vom 20. April 1984
Bericht vom 9.Juni 1983 der Arbeitsgruppe 1 des SEFA betreffend eine Sitzung vom 28. April 1983
Eine Umfrage vom 16. Juni 1983 verteilt durch die Arbeitsgruppe 1 des SEFA
Auszug aus der Niederschrift einer Sitzung der Comitè Permanent des SEFA am 14. Oktober 1983**

(56) Entgegenhaltungen :
**Internes Memorandum der Leer Verpackungen GmbH, Werk Lovenich (276/545), vom 6. Oktober 1983
Norme ISO pour conteneurs
Auszug aus der Niederschrift einer Sitzung der Comité Permanent des SEFA am 9. Mai 1983
Norme NF-H31-358
Normblätter ANSI/ASC MH2-1985 über 55-Gallonen Fässer
Standard Specifications for Containers
Untersuchung über Zweckmässsigkeit und Wirtschaftlichkeit eines sogenannten "containergerechten 55-Gallon-Fasses" durch die Geschäftsführung des Bundesverbandes Stahlblechverpackungen, datiert September 1983
Ergebnisnotiz über ein technisches Gespräch Stahlblechverpackungen/ Grosschemie am 30.09.83 in Hagen, welche Ergebnisnotiz durch den Bundesverband Stahlblechverpackungen verteilt wurde und mit dem 12.10.83 datiert ist.
Zeichnung 4VL-712.544
Zeichnung ("Sulo"-Fass) Vre: 400214
Prospekt "The Development of the Monostress drum"
Prospekt "Vederlichte stalen vaten voor vloeistoffen"
Auszug aus dem Handelsregister
Prospekt "Lichte vaten voor vloeistoffen"**

(73) Patentinhaber : **RHEINPFÄLZISCHE EMBALLAGENFABRIK G. SCHÖNUNG GmbH & Co. KG
Industriestrasse 69-73
W-6730 Neustadt/Weinstrasse (DE)**

(72) Erfinder : **SERR, Georg
Industriestrasse 69
W-6730 Neustadt/Weinstr. (DE)**

(74) Vertreter : **Fischer, Wolf-Dieter, Dipl.-Ing.
Patentanwälte Dipl.-Ing. A.H. Fischer Dipl.-Ing.
W.D. Fischer Kurfürstenstrasse 32
W-6700 Ludwigshafen/Rhein (DE)**

## Beschreibung

Die Erfindung betrifft ein Verfahren zuf Bereitztellung gung von Fässern der Grösse eines 55-US-Gallonen-Fasses mit einem gegenüber herkömmlichen Fässern dieser Art reduzierten Außendurchmesses zwecks Unterbringung der Fässer in einem ISO-Container, wobei die im Querschnitt kreisrunden Fässer einen Fassmantel und einen damit mittels einer Falzverbindung verbundenen Oberboden sowie Boden aufweisen und im Fassmantel nach außen gewölbte Roll- und Verstärkungssicken angeordnet sind.

Für den Transport gefährlicher Güter dienen Blechfässer, die einen Fassmantel aufweisen, der oben und unten durch einen Oberboden bzw. Boden dicht geschlossen wird, wobei zum Verbinden des Fassmantels mit dem Oberboden bzw. Boden eine Falzverbindung gewählt wird. Gegebenenfalls belinden sich im Fassmantel Rollsicken und Verstärkungssicken. Entsprechend der weltweiten Tätigkeit der modernen Industrie ergab sich das Bedürinis nach einer umfassenden internationalen Regelung der Vorschriften für den Transport gefährlicher Güter, wobei auch entsprechende Prüfbestimmungen für die Stahlbleichverpackungen entwickelt wurden. Es wurden auch die Abmessurigen der Fässer Standardisiert, wobei sich weltweit ein Fass durchgesetzt hat, dessen Grösse mit 55-US-Gallonen fetgelegt wurde (vgl. die US-A-3 834 323). Um Material- und Gewichtsersparnisse zu erzielen, versucht man, mit einer möglichst geringen Blechdicke auszukommen. Die Festigkeit dieses Fasses wurde in der Zwischenzeit derart weiterentwickelt, dass die geforderlen Prüfbestimmungen auch bei geringen Blechdicken ohne weiteres eingehalten werden können bzw. übertroffen werden. Massgebend für die Festigkeit ist auch die Ausbildung des Falzes, wobei sich hier besonders Dreifachfalzverbindungen durchgesetzt haben. Dieses 55-US-Gallonen-Fass wird in allen ländern der Erde gefertigt, befüllt, entleert, wieder aufgearbeitet und in den Verkehr gebracht.

Die Maschinen und Anlagen zum Herstellen dieses Fasses sind auf diese Ausbildung vorbereitet. Nach Bedarf sollen diese Fässer in genormten Containern transportiert werden, wobei die sogenannten ISO-Container weltweit verwendet werden. Die Transportmittel sind darauf eingerichtet. Die Abmessungen der Fässer sind jedoch derart, dass der Laderaum eines solchen Containers nicht optimal ausgenutzt werden kann. Eine Änderung der Fassabmessungen, insbesondere mit einem geringen Durchmesser ist undenkbar, weil hier grosse Umstellungsivestitionen an Maschinen und maschinellen Anlagen notwendig werden in Verbindung mit einem erweiterten Werkzeugsortiment. Ausserdem wäre eine zusätzliche Lagerhaltung der Fassteile notwendig. Es wären dann zwei Fasstypen vorhanden, d.h. es müssten Fässer mit dem alten und dem neuen Durchmesser parallel gelertigt werden, was aufgrund der verminderten Stückzahlen unrationell ist. Beim Transport und bei der Lagerung würde eine grössere Fasshöhe, die zur Beibehaltung des gleichen Fassungsvermögens notwendig wäre, erschwerend und verteuernd wirken.

Der Erfindung liegt die Aufgabe zugrunde, ein Verfahren vorzuschlagen, mit dem ohne Änderungen der wesentlichen Faßabmessungen und ohne Beeinträchtigung der Festigkeit eines herkömmlichen 55-US-Gallonen-Fasses sowie unter Verwendung der für seine Herstellung vorgesehenen herkömmlichen Maschinen und maschinellen Anlagen, eine optimale Beladung eines ISO-Containers auch dann erreicht wird, wenn dieser die kleinsten zulässigen Abmessungen aufweist

Diese Aufgabe wird erfindungsgemäß dadurch gelöst, daß der fertige Falz am Boden und am Oberboden am Übergang des Faßrandes in den Bodenrand aus seiner Ursprungslage in seiner Gesamtheit derart zur Faßachse so weit nach innen gebogen oder parallel zur Faßachse nach innen verformt wird, daß der Außendurchmesser des Falzes dem größten Außendurchmesser des Faßmantels angepaßt wird, wobei die nach außen gewölbten Sicken in ihrem Außendurchmesser und in ihrer Form derart verändert werden, daß an der Schmalseite eines ISO-Containers mit Innenabmessungen von 2.335 x 5.900 mm vier und über seine Länge zehn Fässer angeordnet werden können.

Vorteilhaft geht man so vor, dass als Falz ein Mehrlachfalz, vorzugsweise ein Dreifachfalz vorgesehen ist.

Schliesslich geht man vorzugsweise so vor, dass in Verbindung mit der Falzanordnung nahe der Falzverbindung eine grössere Anzahl von Sicken vorgesehen ist.

Die Erfindung bringt den wesentlichen Vorteil, dass unter geringfügiger Abänderung des Fasses, ohne dessen Aussendurchmesser und Füllvolumen zu verändern, ein optimale Beladung der genormten Container möglich ist, wobei insbesondere auch die Festigkeit der Falzverbindung wenigstens erhalten bleibt, bzw. sogar verbessert wird. Bei den geforderten Fallversuchen diagonal wie horizontal lassen sich bessere Ergebnisse erzielen. Bei dem diagonalen Fall stützt sich der Falz an der Aufprallfläche des Falzes auf dem Bodenblech ab und kann sich somit nur unwesentlich deformieren. Die beiden Knickstellen links und rechts vom Aufprallpunkt ziehen sich nicht nach aussen auf. Bei dem horizontalen Fall ist der Aufprallpunkt auf die gesamte Höhe des Fasses verteilt. Da alle Blechabmessungen für Mantel und Boden gleich bleiben, lassen sich alle Werkzeuge und Maschinen wollerverwenden.

Durch die vorgeschlagene Fassausbildung werden die für Abfüllvorrichtungen, automatische Fördermittel, wie auch die für Lagereinrichtungen und -vorrichtungen massgebliche Fasshöhe eingehalten, ohne dass sich das Füllvolumen des Fasses verändert.

Die Erfindung wird in der nachfolgenden Beschreibung anhand von in den Zeichhungen dargestellten Beispielen näher erläutert.

Es zeigen:

Fig. 1 eine schematische Ansicht eines Containers mit der herkömmlichen Beladungsmöglichkeit der Fässer,

Fig. 2 eine schematische Teilansicht eines Fasses mit nach innen gelegtem Falz ohne Sicken,

Fig. 3 eine Ausführungsform für die Ausbildung des Falzes zum Erzielen derartiger gebrauchter Abmassungen,

Fig. 4 die Anordnung des Falzes, wenn dieser nach innen gebogen wird in einzelnen Verfahrensschritten,

Fig. 5 eine weitere Verformungsmöglichkeit für den Falz in einzelnen Verfahrensschritten,

Fig. 6 eine weitere Darstellung des Fassmantels mit verschiedenen Sickenanordnungen,

Fig. 7 eine weitere Ausführungsform des Fassmantels,

Fig. 8 die Darstellung einer Sickenform im Mantel und

Fig. 9 eine weitere Ausführungsform für die Ausbildung derartiger Sicken.

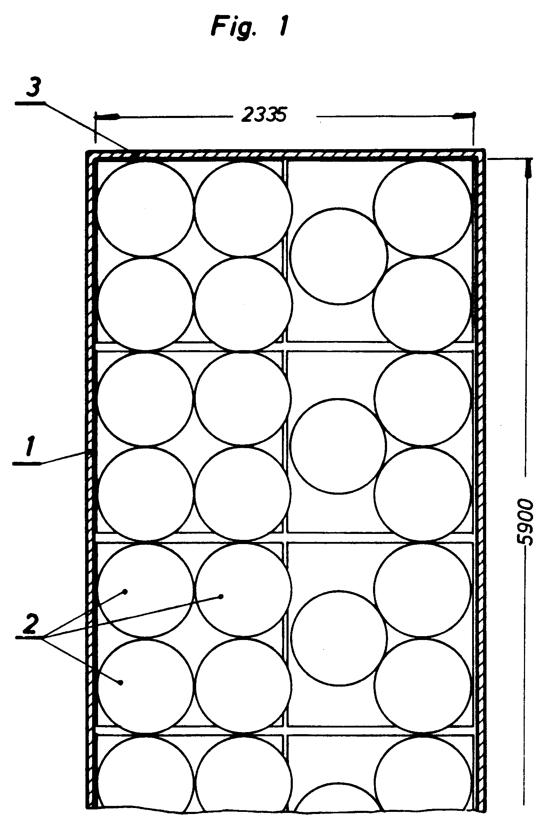

In Fig. 1 ist der Grundriss eines ISO-Containers 1 gezeigt, dessen Abmessungen 2.335 x 5.900 mm sind. Die herkömmlichen Fässer 2 lassen sich lediglich in der gezeigten Anordnung plazieren, wobei es darum geht, vier derartige Fässer 2 nebeneinander an der schmalen Seite 3 des Containers 1 anzuordnen. Die 55-US-Gallonenlässer 2 haben einen Standard-Innendurchmesser von 571,5 mm und eine Innenhöhe von 842 mm, die nicht verändert werden darf.

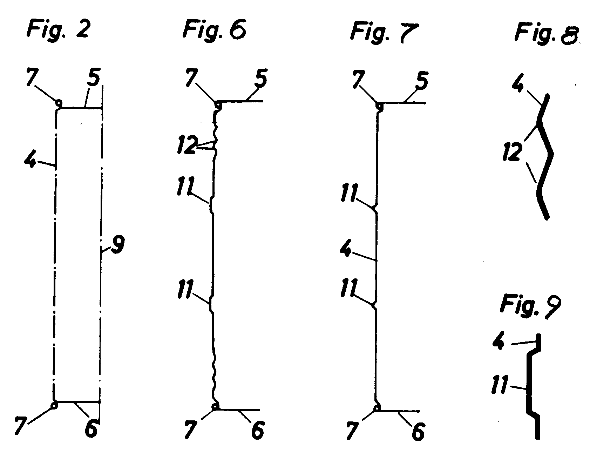

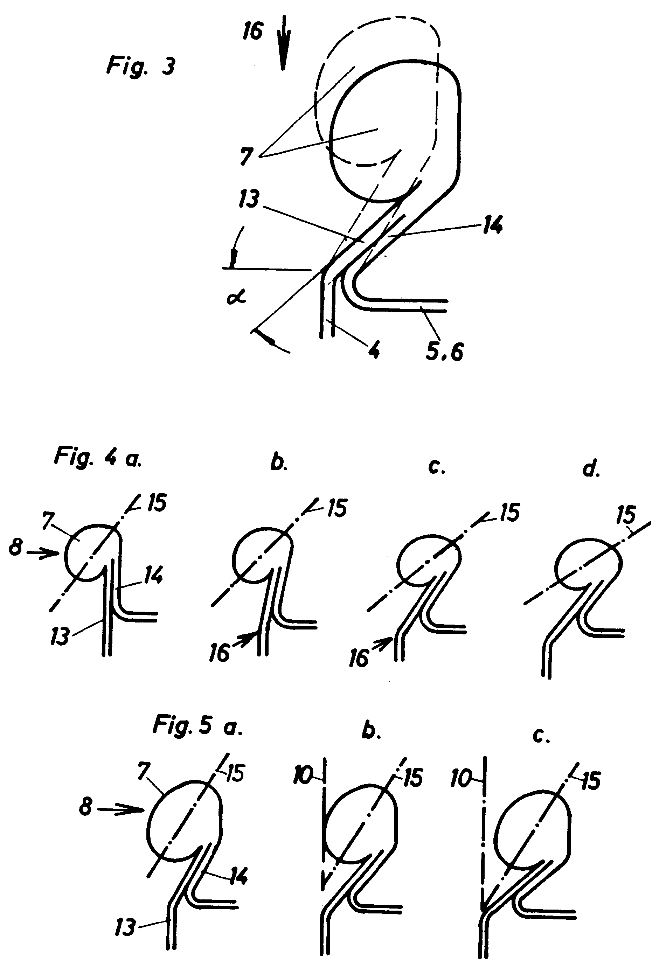

In den Figuren 2 bis 9 sind verschiedene Varianten für Änderungen an einem derartigen Fass gezeigt, um diese Bedingung zu erfüllen. Das Fass besteht aus einem Mantel 4, auf den ein Oberboden 5 sowie ein Boden 6 aufgesetzt sind. Die Verbindung von dem Oberboden 5 sowie dem Boden 6 mit dem Fassmantel 4 erfolgt durch einen Falz 7, wobei insbesondere Mehrfachfalzverbindungen, insbesondere Dreifachfalzverbindungen, besonders vorteilhaft sind. Ein derartige Falz ist schematisch in Fig. 3 gezeigt, wobei bei einem Dreifachfalz sieben Blechstärken nebeneinander innerhalb des Falzes angeordnet sind und die Enden des Mantelrandes 13 sowie des Oberboden- bzw. Bodenrandes 14 innerhalb des Falzes miteinander verhakt sind.

Bei den herkömmlichen Fässern sind der Mantelrand 13 und der Oberboden- bzw. Bodenrand 14 derart ineinander gerollt, dass der Falz 7 nach aussen vorspringt. Bei der in Figur 4 gezeigten Variante ist in dem Bild a) die Ursprungslage des Falzes 7 gezeigt, dessen Achse 15 gegenüber der Fassachse 9 nur gering geneigt ist. In weiteren Verfahrensschritten wird der Falz 7 nunmehr in seiner Gesamtheit derart 8 nach innen gedrückt, dass er nicht über den Fassmantel 4 hervorragt und gegebenenfalls auch noch etwas weiter nach innen gedrückt ist, wie dies in dem Bild d) gezeigt ist. Die Falzachse 15 nimmt dabei gegenüber der Fassachse 9 eine immer grössere Neigung an. Der Biegepunkt 16 befindet sich im wesentlichen am Übergang des Fassrandes 13 in den Bodenrand 14.

Bei der weiteren Variante gemäss Fig. 5 wird der Falz 7 in seiner Gesamtheit parallel zur Fassachse nach innen gedrückt. Er wird hierbei so weit nach innen gedrückt, dass der Aussendurchmesser 10 des Falzes 7 höchstens dem grössten geforderten Aussendurchmesser des Mantels 4 entspricht (Fig. 5b) oder noch etwas weiter innerhalb liegt (Fig. 5c). Durch diese Verformungen und zwar sowohl gemäss Figur 4 als auch Fig. 5 ergibt sich auch noch eine zusätztliche Verfestigung bzw. Verdichtung im Inneren des Falzes 7. Figur 3 zeigt verschiedene Lagen des Falzes 7, wenn im Übergangsbereich des Mantelrandes 13 und des Bodenrandes 14 ein unterschiedlicher Anstellwinkel $\alpha$ vorgesehen ist. Damit lassen auch Veränderungen in der Festigkeit in Richtung 16 der Krafteinleitungszone erzielen.

Bei den herkömmlichen Fässern sind die nach aussen gerichteten Rollsicken 11 mit einer geringen Auflegefläche ausgebildet, wobei man nunmehr zweckmässigerweise zur verbreiterten Ausführung 11 (Figuren 6 und 9) übergeht, um durch notwendige Verkleinerungen der Sickentiefe die dadurch bedingte Schwächung auszugleichen. Bei den Verstärkungssicken sieht man vorteilhaft mehrere nebeneinander angeordnete wellenförmige Sicken 12 vor (Figuren 6 und 8).

In Verbindung mit einem nach innen geformten Falz 7 (Figuren 3 bis 5) lassen sich Verbesserungen in der Festigkeit bei axialen Belastungen dadurch erzielen, dass in den äusseren Manteldritteln nahe beim Falzeinzug gelegen mehrere Sicken 12 eine Entlastung des Falzes 7 bei seiner Beanspruchung durch Slapelung oder beim Fall des Fasses bewirken, weil nach Überwindung einer durch Zahl und Form der Sicken vorgegebenen Kraft eine Federungszone wirksam wird, die die Krafteinleitung aufnimmt und die starre Falzverbindung 7 entlastet. Hier lassen sich auch zusätzlich Verbesserungen durch Veränderungen des Winkels $\alpha$ erzielen. Diese Sicken bewirken auch eine Erhöhung der Festigkeit bei Innendruck veränderungen.

**Patentansprüche**

1. Verfahren zur Bereitstellung von Fässern der Größe eines 55-US-Gallonenfasses mit einem gegenüber herkommlichen Fässern dieser Art reduzierten Außendurchmesser Zwecks Unterbringung der Fässer in einem ISO-Container, wobei die im Querschnitt kreisrunden Fässer einen Faßmantel und einen damit mittels einer Falzverbindung verbundenen Oberboden sowie Boden aufweisen und im Faßmantel nach außen gewölbte Roll- und Verstärkungssicken angeordnet sind, dadurch gekennzeichnet, daß der fertige Falz am Boden und am Oberboden am Übergang des Faßrandes in den Bodenrand aus seiner Ursprungslage in seiner Gesamtheit zur Faßachse so weit nach innen gebogen oder parallel zur Faßachse nach innen verformt wird, daß der Außendurchmesser des Falzes dem größten Außendurchmesser des Faßmantels angepaßt wird, wobei die Sicken in ihrem Außendurchmesser und in ihrer Form derart verändert werden, daß an der Schmalseite eines ISO-Containers mit Innenabmessungen von 2.335 x 5.900 mm vier und über seine Länge zehn Fässer angeordnet werden können.

**Claims**

1. Process for keeping ready barrels of the size of a 55 US-gallon barrel with in view of convenient barrels of this kind a reduced outer diameter for placing these barrels into an ISO container, with the barrels which have a circular cross section exhibiting a barrel wall and a top and bottom end connected thereto by means of a folded seam and with the barrel wall exhibiting outwards vaulted roller beads and reinforcing corrugations, characterized by the fact, that the entire seam on the bottom end as well as on the top end of the barrel is bent inward in such an extent or is deformed inwardly parallel to the axis of the barrel that the outside diameter of the folded seam corresponds to the largest outside diameter of the barrel wall, whereby the roller beads are modified in their outside diameter and in their shape in such a way, that at the narrow side of an ISO container with the internal dimensions of 2.335 x 5.900 mm four barrels and along the length ten barrels can be arranged.

**Revendications**

1. Procédé pour la mise à la disposition des fûts de la taille d'un fût de 55 gallons US (208,2 litres) avec un diamètre extérieur réduit par rapport aux fûts traditionnels de ce genre à la fin de loger les fûts dans un conteneur ISO, les fûts de section circulaire comportant une enveloppe de fût, un fond supérieur et un fond inférieur reliés à celle-ci au moyen d'une liaison par sertissage, et des rouleaux suagés et des moulures de renforcement voûtés vers l'extérieur sont placés dans l'enveloppe de fût, caractérisé en ce que le sertissage sur le fond inférieur et sur le fond supérieur est repoussé sur sa totalité vers l'intérieur ou est déformé vers l'intérieur parallèlement à l'axe de fût de sorte que le diamètre extérieur du sertissage est adapté au plus grand diamètre extérieur de l'enveloppe du fût, le diamètre extérieur et la forme des moulures étant modifiés de telle sorte qu'on peut placer sur le petit côté du conteneur ISO avec les dimensions intérieures de 2.335 x 5.900 mm quatre fûts et sur sa longueur dix fûts.

## Fig. 1

Fig. 2

Fig. 6

Fig. 7

Fig. 8

Fig. 9

Fig. 3

Fig. 4 a.  b.  c.  d.

Fig. 5 a.  b.  c.